# EUROPEAN PATENT SPECIFICATION

(11) **EP 0 461 423 B1**
(45) Date of publication and mention of the grant of the patent: **11.01.1995**
(21) Application number: 91108142.0
(22) Date of filing: 21.05.1991
(51) Int. Cl.: B60R 25/04

(54) **Anti-theft device, particularly for motor vehicles**
Diebstahlsicherung, insbesondere für Kraftfahrzeuge
Dispositif anti-vol, notamment pour véhicules

(30) Priority: 12.06.1990 IT 8558190
(43) Date of publication of application: 18.12.1991
(73) Proprietor: ZENDAR S.p.A., I-42020 Montecavolo di Quattro Castella, Reggio Emilia (IT)
(72) Inventor: Ferretti, Nerino, I-42021 Bibbiano (Reggio Emilia) (IT); Lazzaro, Vittorio, I-35100 Padova (IT)
(74) Representative: Lecce, Giovanni

(56) References cited:
- EP-A- 0 232 974
- EP-A- 0 345 198
- WO-A-88/08796
- DD-A- 263 958
- DE-A- 2 222 721
- DE-A- 3 703 092

## Description

The present invention relates to an anti-theft device particularly usable in motor vehicles.

WO-A1-88/09796 discloses an antitheft device comprising, on the fuel feeding apparatus of the engine, mechanical means being adapted to cut off the fuel flow, said means being arranged in an area having sealing means adapted to prevent access thereto, such as defined in the preamble of claim 1.

Further EP-A-0232974 discloses an antitheft device comprising, on the fuel feeding apparatus of the engine, mechanical means being adapted to cut off the fuel flow, said means being arranged in an area having sealing means adapted to prevent access thereto. The mechanical means which cut off the fuel flow is an electronic circuit mounted to the valve body and a remote keypad.

EP-A-0345198 discloses an antitheft device valve for the feed pipe of liquid fuel comprising a ball valve lock activated by a latchkey.

However, these known antitheft devices also have many drawbacks mainly due to the very complex and encumbering structure and sometimes they are not reliable.

The object of the present invention is to provide a reliable and, at the same time, simple and economical antitheft device.

A further object of the present invention is to provide an antitheft device adaptable to any sort of vehicle.

Still a further object of the invention is to provide an anti-theft device which cannot be bypassed without substituting some of the auxiliary systems of the engine.

A further object is to provide the device according to the invention by means of component parts normally available commercially.

According to the present invention, these objects are achieved by the features in the characterizing part of claim 1.

Particular embodiments of the antitheft device of the present invention are set out in dependent claims 2 to 10.

Further characteristics and advantages of the invention will be more apparent by the following description of some embodiments of the invention, illustrated, by way of example in the enclosed drawings in which:
Fig. 1 is a schematic section view showing a first embodiment of the anti-theft device, according to the invention, applied to the injection pump of a vehicle engine;
Fig. 2 is a section view showing a second embodiment of the anti-theft device according to the invention; and
Fig. 3 is a section view showing a third embodiment of the anti-theft device according to the invention.
Fig. 4 is a section view showing a fourth embodiment of the anti-theft device according to the invention;
Fig. 5 is an enlarged side section view showing the expansion motor of Fig. 4 in detail.

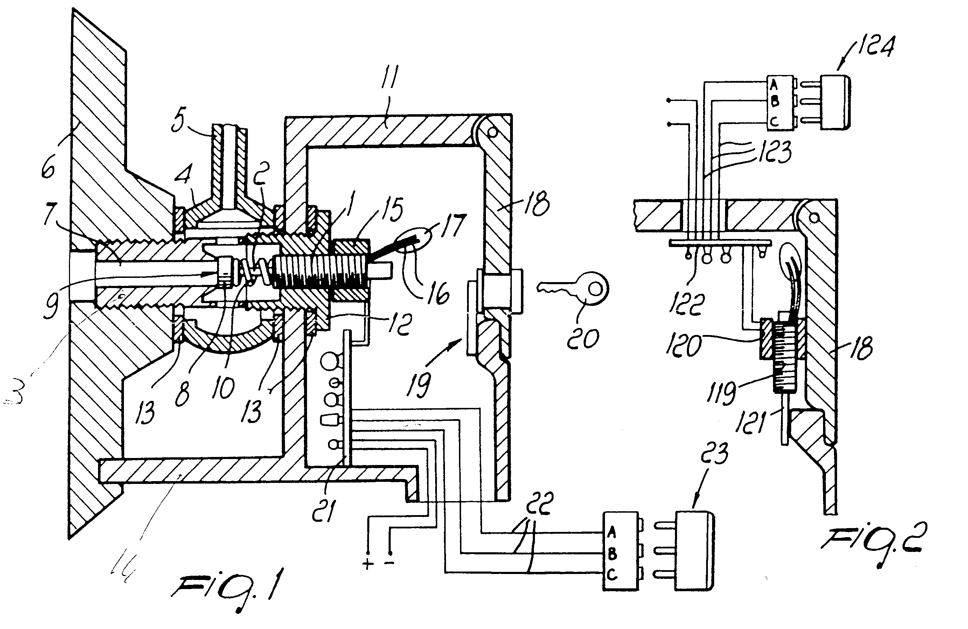

With reference to Fig. 1, the first embodiment of the anti-theft device comprises an actuator 1 which is constituted by a per se known fluid or solid expansion engine, for example using wax that changes phase when heated by an electrical resistance. The change of state causes a plunger 2 to translate axially. The actuator 1 is externally threaded and screwed inside the fastening screw 3 of the banjo union 4, which connects the fuel feed pipe 5 to the injection pump 6 of the engine.

As shown in Fig. 1, the plunger 2 is also coaxial to a nozzle 7 and has, at its end, a plug or shutter 8, adapted to shut the fuel port 9. Conveniently, the plunger 2 operates in contrast with a spring 10, arranged between the shutter 8 and the actuator 1.

Together with the union 4, screw 3 also fastens a case 11 to the injection pump 6. The case 11 is made of special steel and contains the screw nut 12; sealing washers 13 are provided between the connecting surfaces. The sealing washers are conveniently made of copper.

Case 11 has a stud 14 adapted to be inserted in a corresponding seat provided in the injection pump 6 to prevent any rotation of the case.

The actuator 1 has a portion projecting inside the case 11 and embraced by a heater element 15; the actuator furthermore has two small pipes 16 having their ends buried in an anti-tampering fusible body 17. When the fusible body 17 melts, for example because of an external warming of the case 11, frees the passage of the wax contained in the actuator 1 that therefore empties and becomes unserviceable blocking the plunger 2.

A cover 18 is hinged to case 11 and is provided with a mechanical lock 19 and key 20.

An electronic circuit 21 is arranged inside the case 11 and is connected to the electric feeding system of the vehicle for feeding and encoding the actuator 1.

Adapted code wires 22 connect the electronic circuit 21 with the actuator 1 and with a related electronic decoder 23 (having an electronic key) for cutting the fuel.

In the illustrated embodiment, actuator 1 opens the fuel passage when under tension, i.e. when the engine of the vehicle is started and the electronic key is inserted.

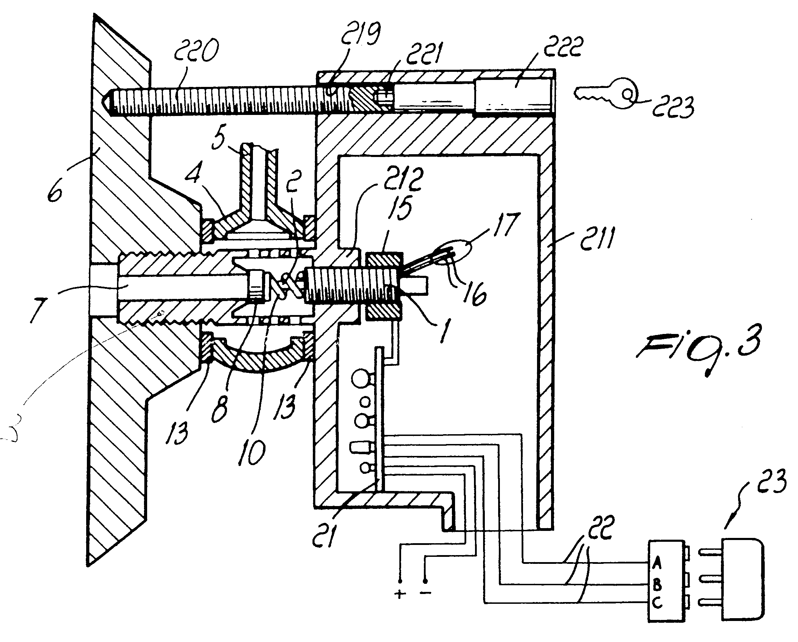

With reference to Fig. 2, a second embodiment of the device, instead of the mechanical lock provided on the cover 18, has an electronic lock comprising a second actuator 119, similar to the actuator 1, arranged on a support member 120 associated with the cover 18. The plunger 121 of the actuator 119 constitutes the locking member for the cover.

Actuator 119 is connected with an electronic circuit 122, fed by the electric feeding system of the vehicle. The electronic circuit 122 is connected to an electronic key 124 by means of code wires 123.

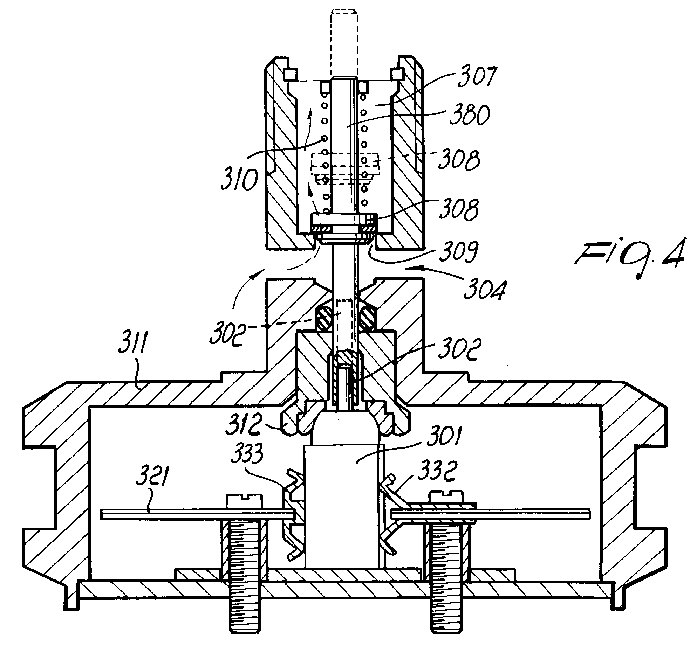

With reference to Fig. 3, in a third embodiment of the device according to the invention, the screw nut 212 for fastening the case 211 to the union 4 is provided monolithically with the case 211.

A threaded bore 219 is provided at the case 211 and has a screw 220 which is inserted into a corresponding seat provided at the injection pump 6 of the vehicle. The screw 220 has a tool seat 221 which is accessible only by opening a plug 222, with the adapted key 223.

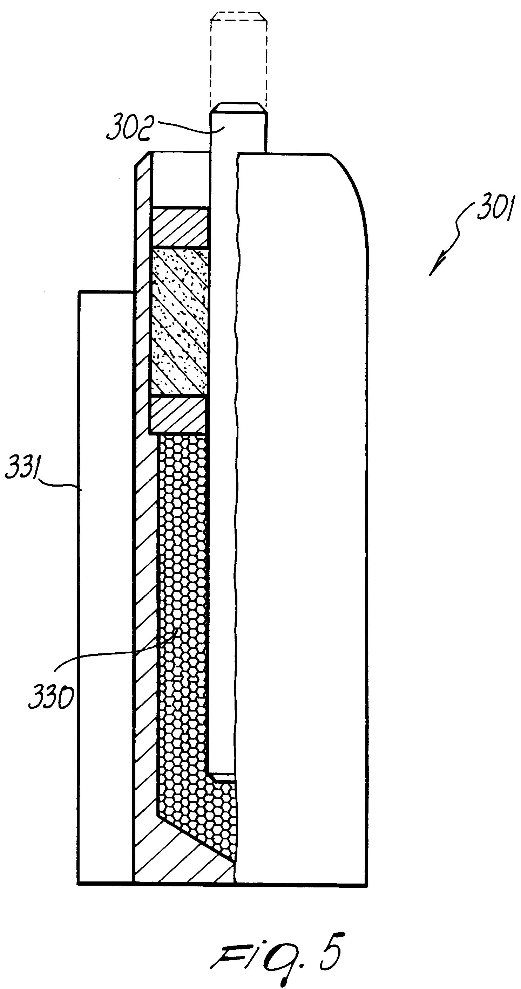

Figs. 4 and 5 show a further embodiment of the anti-theft device, according to the invention, comprising a wax actuator 301 inserted in a case 311 which is adapted to be fastened, for example, to the fuel injection pump of the vehicle, as previously described. In particular, fuel is fed into an annular passage 304 and then to the injection pump of the vehicle (not illustrated in the figure) through the nozzle 307.

The nozzle 307 is provided with a shaft 380 having a shutter 308 adapted to close the fuel port 309; Fig. 4 shows the device with the shutter 368 in the closed position, while the dotted lines show the open position. The shutter 308 is biased in the closed position by a spring 310.

A screw nut 312 fastens the case 311 on the shutter portion of the device including the union (not illustrated in Fig. 4) adapted to connect the injection pump to the fuel feeding duct (also not illustrated in Fig. 4).

The shaft 380 is associated with the plunger 302 of actuator 301 which is a per se known expansion motor containing wax 330 and comprising a PTC resistance 331.

PTC resistance 331 is respectively connected, at one side, to a ground connector 332 and, at the other side, to a positive connector 333. Connectors 332 and 333 are associated with an electronic circuit 321 fed by the electrical feeding system of the vehicle, and associated with an electronic key as previously described.

The operation of the device is as follows: in a normal condition, the device is in a locking position, as illustrated in Fig. 4, the passage of fuel being interrupted by the shutter 308. To start the vehicle engine, it is first necessary to actuate the device, for example by means of the electronic key, commanding the electronic circuit 321 to feed current to the actuator 301. When the wax melts the plunger 302 extends and, in contrast with spring 310, operates the shaft 380 opening the shutter 308. When the engine is stopped, the electronic circuit 321 does not feed the actuator 301, the wax solidifies letting the plunger retract and therefore the shutter 308 closes the passage 304 cutting the fuel supply to the injection pump.

It has been seen in practice that the device according to the invention achieves the intended aim and objects being characterized by a simple and reliable construction.

The anti-theft device can be neutralized only through a total bypass of the fuel feeding system of the vehicle, in fact the actuator, which cuts off the fuel, is contained in a sealed container.

The device can be manufactured at low costs because of its simple structure.

The materials employed, as well as the dimensions, may be any according to the specific needs and the state of the art.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. An anti-theft device for vehicles comprising, on the fuel feeding apparatus (5,6) of the engine, mechanical means (1,8,301,308) being adapted to cut off the fuel flow, said means (1,8,301,308) being arranged in an area having sealing means (11,18,211,311) adapted to prevent access thereto and wherein this mechanical means (1,8,301,308) comprises an electrical expansion actuator (1,301) being in a closed position when there is no current in the electric circuit which controls the actuator, said actuator having a shutter (8,308) adapted to close a fuel port (9,309), said actuator acting on the shutter (8,308) in contrast with an elastic element (10,310), said elastic element normally biasing said shutter in a closed position, characterized in that said electric expansion actuator is constituted by an expansion engine (1,301) containing a fluid or solid changing the phase when heated, and of electric or electronic heating means(15,332,333,321) fed by the electric feeding system of the vehicle.

2. The anti-theft device according to claim 1, characterized in that a portion of the actuator (1) is embraced by the heating means (15).

3. The anti-theft device according to claim 1 or 2, characterized in that the actuator (1) comprises two small pipes (16), each having one end connected with said actuator (1) and the other end buried in an anti-tampering fusible body (17), said fusible body being adapted to melt when heated.

4. The anti-theft device according to anyone of the preceding claims, characterized in that the actuator (1) is coaxially inserted into a screw (12) that fastens an union (4) for associating a fuel feeding duct (5) with the fuel iniection pump (6) of the engine.

5. The anti-theft device according to anyone of the preceding claims, characterized in that the sealing means comprises a case (11,211,311) fastened to the pump (6) by means of the screw (12,212,312).

6. The anti-theft device according to claim 5, wherein the case (211) is provided with a threaded bore (219) wherein a screw (220) is inserted and screwed; said screw (220) being inserted into a corresponding seat provided at the pump (6) and having a tool seat (221), the access thereto being prevented by a plug (222) with key (223).

7. The anti-theft device according to anyone of the preceding claims, characterized in that the case comprises a cover (18) operated by means of a lock (19,119).

8. The anti-theft device according to anyone of the preceding claims, characterized in that the lock is electronic and comprises a second actuator (119) connected to an electronic circuit (122) fed by the electric feeding system of the vehicle; said electronic circuit (122) being connected to an electronic key (124) by means of code wires (123).

9. The anti-theft device according to claim 1, characterized in that the actuator (301) is an expansion motor containing wax (330) and comprising a PTC resistance (331) connected, at one side, to a ground connector (332) and, at the other side, to a positive connector (333), said connectors (332,333) being associated with an electronic circuit (321), fed by the electrical feeding system of the vehicle, and with an electronic key (124).

10. The anti-theft device according to claim 9, wherein the expansion motor (301) is provided with a plunger (302) acting on the shaft (380) of the shutter (308) in contrast with an elastic means (310).

## Patentansprüche

1. Anti-Diebstahlsvorrichtung für Fahrzeuge mit an der Kraftstoffzufuhreinrichtung (5, 6) der Maschine angeordneten mechanischen Mitteln (1, 8, 301, 308) zum Unterbrechen des Treibstoffflusses, die in einem Bereich mit umschließenden, den Zugang zu ihnen verhindernden Mitteln (11, 18, 211, 311) angeordnet sind und einen elektrischen Ausdehnungs-Auslöser (1, 301) aufweisen, der sich in einer geschlossenen Position befindet, wenn in dem Stromkreis, welcher den Auslöser steuert, kein Strom fließt, wobei der Auslöser ein Verschlußteil (8, 308) besitzt, durch das ein Treibstoffkanal (9, 309) verschließbar ist, und der Auslöser auf das Verschlußteil (8, 308) gegen ein elastisches Element (10, 310) wirkt, das normalerweise das Verschlußteil in einer geschlossenen Position vorbelastet, **dadurch gekennzeichnet**, daß der elektrische Ausdehnungs-Auslöser aus einem Ausdehnungs-Mechanismus (1, 301), der eine Flüssigkeit oder einen Feststoff enthält, welcher bei Erwärmung die Phase wechselt, und aus elektrischen oder elektronischen Heizmitteln (15, 332, 333, 321) gebildet ist, die von dem elektrischen Versorgungssystem des Fahrzeugs gespeist sind.

2. Anti-Diebstahlsvorrichtung nach Anspruch 1, **dadurch gekennzeichnet**, daß ein Teil des Auslösers (1) von den Heizmitteln (15) umfaßt ist.

3. Anti-Diebstahlsvorrichtung nach Anspruch 1 oder 2, **dadurch gekennzeichnet**, daß der Auslöser (1) zwei kleine Röhren (16) aufweist, von denen jeweils ein Ende mit dem Auslöser (1) verbunden ist und das andere Ende in einem leicht schmelzbaren Körper (17) zur Eingriffssicherung versenkt ist, wobei der leicht schmelzbare Körper bei Erwärmung verflüssigbar ist.

4. Anti-Diebstahlsvorrichtung nach einem der vorhergehenden Ansprüche, **dadurch gekennzeichnet**, daß der Auslöser (1) koaxial in eine Schraube (12) eingefügt ist, die einen Körper (4) zum Verbinden einer Treibstoffzuführleitung (5) mit der Kraftstoff-Einspritzpumpe (6) der Maschine festklemmt.

5. Anti-Diebstahlsvorrichtung nach einem der vorhergehenden Ansprüche, **dadurch gekennzeichnet**, daß die umschließenden Mittel ein Gehäuse (11, 211, 311) besitzen, welches mittels der Schraube (12, 212, 312) an der Pumpe (6) befestigt ist.

6. Anti-Diebstahlsvorrichtung nach Anspruch 5, in welcher das Gehäuse (211) mit einer Gewindebohrung (219) versehen ist, in welche eine Schraube (220) eingefügt und verschraubt ist, die in einen entsprechenden, an der Pumpe (6) vorgesehenen Sitz eingeführt ist und einen Werkzeugansatz (221) aufweist, zu dem der Zugang durch ein Steckschloß (222) mit Schlüssel (223) versperrt ist.

7. Anti-Diebstahlsvorrichtung nach einem der vorhergehenden Ansprüche, **dadurch gekennzeichnet**, daß das Gehäuse eine Abdeckung (18) aufweist, die mittels eines Verschlusses (19, 119) wirksam ist.

8. Anti-Diebstahlsvorrichtung nach einem der vorhergehenden Ansprüche, **dadurch gekennzeichnet**, daß der Verschluß elektronisch ist und einen zweiten Auslöser (119) besitzt, der mit einem elektronischen Schaltkreis (122) verbunden ist, welcher durch das elektrische Versorgungssystem des Fahrzeugs gespeist und mit einem elektronischen Schlüssel (124) über Schlüsselleitungen (123) verbunden ist.

9. Anti-Diebstahlsvorrichtung nach Anspruch 1, **dadurch gekennzeichnet**, daß der Auslöser (301) ein Expansionsantrieb ist, der Wachs (330) enthält und einen PTC-Widerstand (331) aufweist, der an einer Seite mit einem Masseanschluß (332) und auf der anderen Seite mit einem positiven Anschluß (331) verbunden ist, wobei die Anschlüsse (332, 333) mit einer elektronischen Schaltung (321), die durch das elektrische Versorgungssystem des Fahrzeugs gespeist ist, und mit einem elektronischen Schlüssel (124) verbunden sind.

10. Anti-Diebstahlsvorrichtung nach Anspruch 9, in welcher der Expansionsantrieb (301) mit einem Stößel (302) versehen ist, der auf die Welle (380) des Verschlußteils (308) gegen elastische Mittel (310) wirkt.

## Revendications

1. Dispositif antivol pour véhicules comprenant, sur le système (5,6) d'alimentation en carburant du moteur, des moyens mécaniques (1,8,301,308) adaptés de manière à couper l'écoulement du combustible, ces moyens (1,8,301,308) étant disposés dans une zone comportant des moyens de protection (11,18,211,311) adaptés de manière à empêcher d'avoir accès aux moyens de coupure de l'écoulement, et dans lequel les moyens mécaniques (1,8,301,308) comprennent un actionneur électrique à expansion (1,301) qui se trouve dans une position fermée lorsqu'aucun courant ne passe dans le circuit électrique qui commande l'actionneur, cet actionneur comportant un obturateur (8,308) adapté de manière à fermer un orifice de carburant (9,309), l'actionneur agissant sur l'obturateur (8,308) en opposition avec un élément élastique (10,310) qui sollicite normalement l'obturateur vers sa position fermée, caractérisé en ce que l'actionneur électrique à expansion est constitué par un moteur à expansion (1,301) contenant un fluide ou un solide changeant de phase lorsqu'il est chauffé et par un moyen de chauffage électrique ou électronique (15,332,333,321) alimenté par le système d'alimentation électrique du véhicule.

2. Dispositif antivol suivant la revendication 1 caractérisé en ce qu'une portion de l'actionneur (1) est embrassée par le moyen de chauffage (15).

3. Dispositif antivol suivant l'une quelconque des revendications 1 ou 2 caractérisé en ce que l'actionneur (1) comprend deux petits tubes (16) ayant chacun une extrémité connectée à l'actionneur (1) et une autre extrémité noyée dans un corps fusible antifraude (17), ce corps fusible étant adapté de manière à fondre lorsqu'il est chauffé.

4. Dispositif antivol suivant l'une quelconque des revendications précédentes caractérisé en ce que l'actionneur (1) est inséré coaxialement dans une vis (12) qui fixe un raccord (4) pour associer un conduit d'alimentation en carburant (5) avec la pompe d'injection de carburant (6) du moteur.

5. Dispositif antivol suivant l'une quelconque des revendications précédentes caractérisé en ce que les moyens de protection comprennent un boîtier (11,211,311) fixé à la pompe (6) au moyen de la vis (12,212,312).

6. Dispositif antivol suivant la revendication 5, caractérisé en ce que le boîtier (211) est pourvu d'un trou fileté (219) dans lequel est insérée et vissée une vis (220), cette vis (220) étant insérée dans un logement correspondant prévu sur la pompe (6) et comportant un siège (221) pour un outil, l'accès à ce siège d'outil étant empêché par un bouchon (222) pourvu d'une clé (223).

7. Dispositif antivol suivant l'une quelconque des revendications précédentes caractérisé en ce que le boîtier comprend un couvercle (18) actionné au moyen d'une serrure (19,119).

8. Dispositif antivol suivant l'une quelconque des revendications précédentes caractérisé en ce que la serrure est électronique et il comprend un second actionneur (119) connecté à un circuit électronique (122) alimenté par le système d'alimentation électrique du véhicule, ce circuit électronique (122) étant connecté à une clé électronique (124) au moyen de fils de codage (123).

9. Dispositif antivol suivant la revendication 1 caractérisé en ce que l'actionneur (301) est un moteur à expansion contenant de la cire (330) et comprenant une résistance (331) à coefficient de température positif, connectée, d'un côté, à un connecteur de mise à la masse (332) et, de l'autre côté, à un connecteur positif (333), ces connecteurs (332,333) étant associés à un circuit électronique (321), alimenté par le système d'alimentation électrique du véhicule, et à une clé électronique (124).

10. Dispositif antivol suivant la revendication 9 caractérisé en ce que le moteur à expansion (301) est pourvu d'un plongeur (302) agissant sur la tige (380) de l'obturateur (308), en opposition avec un moyen élastique (310).
